# EUROPEAN PATENT SPECIFICATION

(11) **EP 4 086 151 B1**
(45) Date of publication and mention of the grant of the patent: **16.07.2025**
(21) Application number: 22166849.4
(22) Date of filing: 05.04.2022
(51) Int. Cl.: B62K 25/28, B60G 3/14, B60G 3/20, B60G 11/26, B60G 11/56, B60G 17/04, B60G 15/12, F16F 9/06, B62K 25/04

(54) **OSCILLATION SYSTEM OF THE SWINGARM OF A WHEEL WITH RESPECT TO THE FRAME OF A VEHICLE**
SCHWINGUNGSSYSTEM FÜR DEN SCHWENKARM EINES RADES IN BEZUG AUF DEN RAHMEN EINES FAHRZEUGS
SYSTÈME D'OSCILLATION DU BRAS OSCILLANT D'UNE ROUE PAR RAPPORT AU CHÂSSIS D'UN VÉHICULE

(30) Priority: 06.04.2021 IT 202100008522
(43) Date of publication of application: 09.11.2022
(73) Proprietor: Umbria Kinetics SRL, 06034 Foligno (PG) (IT)
(72) Inventor: GIULIANI, Federico, 06034 Foligno (IT)
(74) Representative: Ercolani, Simone Pietro

(56) References cited:
- EP-A2- 1 535 828
- WO-A2-2017/115393
- DE-A1- 10 114 262
- DE-A1- 3 044 016
- JP-A- S5 923 710
- JP-A- S6 018 476
- JP-A- S6 078 804
- US-A1- 2006 196 741
- US-A1- 2006 266 602
- US-A1- 2020 398 632

## Description

### FIELD OF THE INVENTION

The present invention concerns an oscillation system of the swingarm of a back wheel with respect to the frame of a two-wheeled vehicle. Such oscillation system is used for the oscillation of the back wheel of a motorcycle, or anyhow of a two-wheeled vehicle, and is part of the suspension device of the two-wheeled vehicle.

### KNOWN PRIOR ART

Suspensions comprising a fluidic damper constrained, directly or indirectly, between the wheel and the frame of the vehicle, which fluidic damper is equipped with a cylinder and a piston sliding within said cylinder, and an elastic element, such as a coil spring, combinable with said fluidic damper generally in coaxial position with respect to the latter, and which produces a variable force according to the variation of the relative position between the piston and the cylinder, are known in the field of motorcycles. It is also known that the suspensions of a vehicle must be able to fulfill different functions. In detail, the suspensions must simultaneously reach the following purposes:
- ensuring the correct adherence of the tires to the road surface so as to optimally transfer the traction, braking and lateral acceleration forces imposed by the vehicle;
- ensuring the desired attitude of the motorcycle in its different conditions of use;
- performing a correct isolation of the sprung masses from the vibrations arising from the interaction of the tires with the ground, so as to ensure comfort and adherence of the tires with the ground.

The optimal characteristics in terms of the elasticity and damping of the spring and damper depend on which of these functions is most relevant in the specific application. For example, racing vehicles favor the stability of the attitude and the rapidity of the load transfers, thus like best high stiffness and damping values to the detriment of comfort, and vice versa, tourism vehicles will favor damping and stiffness values that favor the isolation of the vibrations. Various systems for adjusting the elastic and damping characteristics applied directly to the damper and the coil spring, both adjustable by the user and electronic, are known in order to be able to adapt the characteristics of the suspension to the ground and to the different driving and load conditions. Such devices directly vary the elastic and damping characteristics on the devices themselves. For example, methods for allowing to pre-compress the coil spring or to obstruct or free an oil passage by means of conical pins through the piston of the damper are known.

It is also possible to vary the elastic and damping characteristics acting on the wheel and the frame by acting on the mechanical systems that connect the piston and said cylinder to them. Such mechanical systems are able to vary the transmission of the loads generated by the spring and the damper according to the position of the piston with respect to the cylinder of the damper. The performance of this variation depends on the relative position and couplings of the transmission members that connect the damper to the wheel and frame.

In this regard, systems that allow the oscillation of the swingarm of the wheel with respect to the frame, in particular for the back wheel, are known.

For example, a classic system of oscillation of the swingarm of the wheel with respect to the frame of the motorcycle, in which the swingarm is rotatably constrained to the frame at a first pin, comprises a connecting rod and a crank to form, together with a portion of the swingarm, a sort of four-bar linkage. The connecting rod comprises a first end rotatably connected to the frame and a second end rotatably constrained to the crank at a further first end of the crank, while the crank comprises a further second end rotatably constrained to the swingarm at a second pin distinct from the first pin. In the different embodiments of known oscillation systems, the damper can comprise a first end thereof connected directly or indirectly in a rotatable manner to the frame and a second end thereof connected directly or indirectly in a rotatable manner to the crank, in a position distinct from the further first end and from the further second end of the crank. In other known oscillation systems, the crank comprises the same damper which thus has a first end thereof connected directly or indirectly in a rotatable manner to the connecting rod, at the second end of the latter, and a second end thereof connected directly or indirectly in a rotatable manner to the swingarm at a point different from the first pivot pin. In the embodiments described above, the swingarm length comprised between the first pivot pin and the second pivot pin in practice is a further connecting rod which, together with the crank which is in some cases replaced by the damper, and together with the connecting rod connected to the frame, constitutes an articulated system.

Such oscillation systems are not easily adjustable. In fact, the only way to vary the configuration of the wheel, thus the possible raising or lowering of the motorcycle with respect to the ground depending on the attitude to be given to the motorcycle, is to replace the connecting rod with a longer or shorter one or - in less common cases - to replace the crank.

The patent EP1535828 in the name of Showa Corp describes a suspension apparatus of a vehicle in which a shock absorber assembly is provided between a body of the vehicle and a swinging swingarm.

The patent JPS6018476 in the name of Yamaha motor Co LTD concerns a height-adjustment device for a motorcycle.

The patent US2006/196741A1 in the name of Kindblom Sven concerns a shock absorber and discloses an oscillation system according to the preamble of claim 1.

The patent WO2017/115393 in the name of Berti concerns the motorcycle field. More in detail, the solution described in WO2017/115393 concerns a motorcycle with a multi-configuration frame comprising kinematic assemblies by means of which it is possible to modify the configuration of the motorcycle.

Object of the present invention is to implement an oscillation system of the wheel of a vehicle, in particular a two-wheeled one, which allows to adjust the attitude of the vehicle in a simple, quick and dynamic way.

Further object of the present invention is to implement an oscillation system of the wheel of a vehicle that does not require to disassemble or replace components of the oscillation system itself or that is electronically controllable.

Finally, object of the present invention is to implement an oscillation system of the wheel of a vehicle that contributes, together with the suspension, to ensure the correct adherence of the tires to the road surface, to ensure the desired attitude of the motorcycle in its different conditions of use and to improve the comfort of the user or the stability of the vehicle.

### SUMMARY OF THE INVENTION

These and further objects are achieved by the oscillation system of a swingarm of a back wheel with respect to the frame of a two-wheeled vehicle according to claim 1. Preferred embodiments of the invention are defined by the dependent claims.

Thanks to such solution, the oscillation system of the back wheel of a two-wheeled vehicle according to the invention, in particular for the back wheel of a motorcycle, allows to adjust the attitude of the motorcycle in a simple, quick and dynamic way. In fact, by using the distance variation means, it is possible to vary both the static height of the vehicle and the kinematic chain that adjusts the movement of the wheel with respect to the frame, and consequently the load transmission laws between said wheel and said frame, according to a wide range of possible configurations. For example, it will be sufficient to use the distance variation means to raise or lower the two-wheeled vehicle without moreover having to disassemble or replace components of the suspension. Moreover, by extending or shortening the connecting rod, or the crank, it is possible to modify the final geometry of the suspension and to thus achieve a high number of distinct attitudes. Moreover, the same distance adjustment means can be used to increase the comfort of the user, the adherence of the tire to the road, also dynamically, i.e. the stability of the vehicle.

According to an embodiment of the invention, the oscillation system comprises a first fluidic damper having a third end connected directly, or indirectly, in a rotatable manner to said frame and a fourth end connected directly or indirectly in a rotatable manner to said connecting rod, or to said crank, in a position distinct from said first end and said second end, or from said further first end and said further second end, said connecting rod being also rotatably constrained to said frame at said first end.

According to a further embodiment of the invention, said crank comprises a first damper having a third end connected directly or indirectly in a rotatable manner to said connecting rod at said second end, and a fourth end connected directly or indirectly in a rotatable manner to said swingarm at a distinct point from said first pivot pin.

In the two embodiments described above, the damper, together with the distance adjustment means, ensures an increased level of comfort and adherence of the tire with respect to the oscillation systems of the swingarm of known art. Moreover, the oscillation system thus made has greater adjustability than that of the oscillation systems of known art.

According to the invention, said static and/or dynamic variation means comprise a fluid-transfer device; said fluid-transfer device comprises a cylinder having a first chamber and a second chamber, and a piston which slides within said cylinder thus varying the dimensions of said first chamber and said second chamber, wherein said cylinder is integral to a first portion of said connecting rod and/or said crank, and said piston is directly or indirectly integral to a second portion of said connecting rod and/or said crank.

In particular, said distance variation means can also comprise at least one elastic element functionally combined with said fluid-transfer device and acting for at least part of the stroke of said piston with respect to said cylinder.

According to the invention, the distance variation means comprise a gas spring functionally combined with said second chamber and/or said first chamber of said cylinder.

According to the invention, said gas spring in turn comprises a third chamber and a fourth chamber, said third chamber containing a gas, wherein said third chamber and said fourth chamber are separated from each other, directly or indirectly, by at least one dividing wall which is sliding, or deformable, in such a way to vary the volume of said third chamber and said fourth chamber depending on the position of said piston with respect to said cylinder to vary the volume, or pressure, of the gas within said third chamber According to the invention, said fourth chamber is in fluidic communication with said second chamber; said fourth chamber and said second chamber contain an incompressible fluid that is transferred between said second chamber and said fourth chamber and vice versa, as the position of said piston with respect to said cylinder varies. Said at least one dividing wall is also sliding or deformable depending on the volume of incompressible fluid transferred from said second chamber to said fourth chamber, and vice versa.

According to the invention, said transfer device comprises at least one duct for fluidically connecting said fourth chamber to said second chamber for transferring said incompressible fluid between said second chamber and said fourth chamber, and vice versa.

According to the invention, said transfer device comprises a rod integrally combined with said piston and able to slide said piston within said cylinder; said rod is provided with an inner housing that accommodates said gas spring. Said inner housing comprises said third chamber, said fourth chamber and said dividing wall. Said duct is thus formed at least partially within said rod and/or said piston to fluidically connect said second chamber to said fourth chamber. This allows to decrease the volume of the transfer device, since the gas spring is inside the rod that moves the piston.

In particular, said first chamber of said cylinder is fluidically separated from said second chamber.

In another embodiment, said first chamber of said cylinder is fluidically connected to said second chamber by means of said duct. In this case, the cylinder and the piston of the transfer device are of the double-acting type.

According to the invention, said gas spring comprises first adjustment means to adjust the pressure of said gas inside said third chamber. This can be done both with the vehicle, i.e. motorcycle, stopped or running.

According to the invention, said inner housing comprises a hole formed within said rod and said gas spring comprises a fifth chamber and at least one second dividing wall to separate said third chamber from said fifth chamber; said second dividing wall is sliding or deformable, so as to vary the volume of said third chamber and said fifth chamber, wherein said fifth chamber and said second dividing wall are arranged within said hole.

According to the invention, said first adjustment means also comprise a sixth chamber fluidically connected to said fifth chamber, wherein said sixth chamber and said fifth chamber contain an incompressible fluid transferred by said first adjustment means between said fifth chamber and said sixth chamber, and vice versa. Said at least one second dividing wall is also sliding or deformable depending on the volume of incompressible fluid transferred from said fifth chamber to said sixth chamber, and vice versa

According to a further embodiment of the invention, said gas spring also comprises a further chamber arranged between said third chamber and said fourth chamber and at least one further dividing wall to separate said further chamber from said fourth chamber. Said gas spring also comprises at least one elastic spring having a first end resting on said first dividing wall and a second end resting on said further dividing wall. In practice, the elastic spring is in series with the third chamber, where the gas of the gas spring is contained.

Still, said first adjustment means comprise an actuator for fluidically connecting said sixth chamber to said fifth chamber and to said fourth chamber and/or said first chamber, and at least one valve for distributing said incompressible fluid between said fifth chamber and said fourth chamber and/or said first chamber.

Finally, said transfer device comprises second means to adjust the pressure of the incompressible fluid of said first and/or said second chamber and/or, directly or indirectly, the pressure of said gas within said third chamber.

Still, the objects are achieved by means of a two-wheeled vehicle, in particular, but without limitations, a motorcycle (or motorbike), comprising a frame, at least one back wheel, a swingarm for said back wheel and an oscillation system of the swingarm with respect to said frame according to one or more of claims 1 to 8.

The two-wheeled vehicle can also be a bicycle.

### BRIEF DESCRIPTION OF THE DRAWINGS

Several particular embodiments of the present invention will now be described by way of example only and without limitations with reference to the accompanying figures, in which:
figure 1 is a schematic view of a first embodiment of the oscillation device according to the invention;
figure 2 is a schematic view of a second embodiment of the oscillation device according to the invention;
figure 3 is a schematic view of a third embodiment of the oscillation device according to the invention;
figure 4 is a schematic view of the means to vary the distance in a static and/or dynamic manner, provided in the embodiments of figures 1, 2 and 3;
figures 5, 6 and 7 are schematic longitudinal sectional views of three different gas springs used with the distance variation means shown in figure 4;
figure 8 shows a longitudinal sectional view of distance variation means;
figure 9a shows a longitudinal sectional view of distance variation means different from the one shown in figure 8;
figure 9b shows a longitudinal sectional view of distance variation means according to figure 9a in a different position of the dividing wall and of the further dividing wall.

### DETAILED DESCRIPTION OF SOME EMBODIMENTS OF THE PRESENT INVENTION

With particular reference to such figures, 1 denotes the oscillation system of the swingarm of a wheel according to the invention. In the embodiments of the invention described hereunder, such swingarm 2 is used for the back wheel 3 of a two-wheeled vehicle such as, for example, a motorcycle.

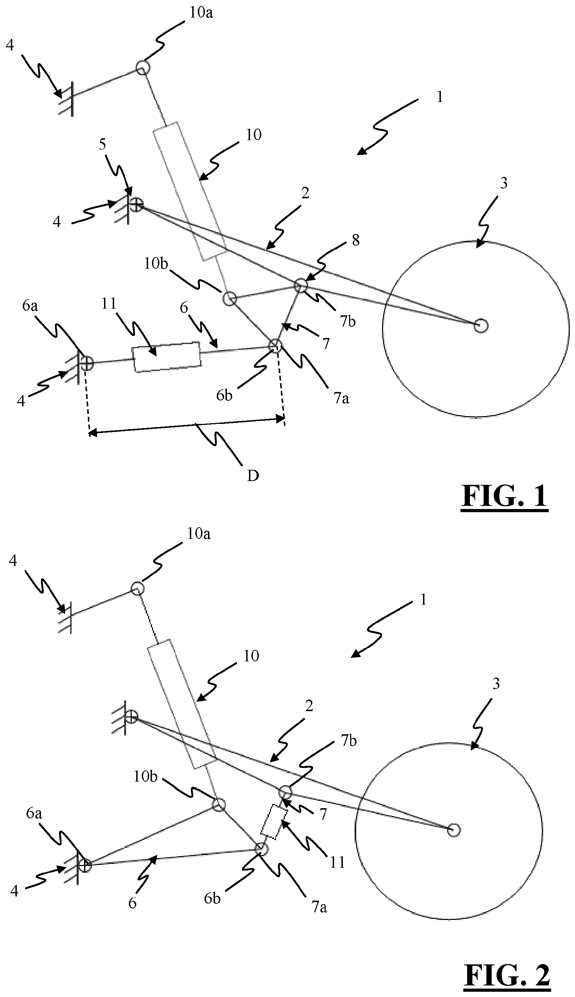

With reference to figure 1, according to a first embodiment of the invention, the oscillation system 1 of the swingarm 2 of a wheel 3 with respect to the frame 4 of a vehicle, in particular of a motorcycle (or motorbike), wherein the swingarm 2 is rotatably constrained to the frame 4 at a first pin 5, comprises a connecting rod 6 and a crank 7, wherein the connecting rod 6 in turn comprises a first end 6a connected to the frame 4 and a second end 6b rotatably constrained to the crank 7 at a further first end 7a of the crank 7, and wherein the crank 7 comprises a further second end 7b rotatably constrained to the swingarm 2 at a second pin 8 distinct from the first pin 5.

It should be noted that such solution is adapted for any two-wheeled vehicle. Thus, in addition to being adapted for a motorcycle, it is also adapted for a bicycle, more specifically of the type known under the English name mountain bike.

It should further be set forth that, although the oscillation system 1 is usable more widely for the back wheel, such oscillation system 1 could however also be used on the front wheel of a two-wheeled vehicle, without thereby departing from the protection scope of the present invention.

According to the invention, the connecting rod 6 comprises means 11 to vary the distance D in a static and/or dynamic way respectively between the first end 6a and the second end 6b of the connecting rod 6.

Moreover, in such embodiment, the system 1 comprises a fluidic damper 10 having a third end 10a connected indirectly, in this case, in a rotatable manner to the frame 4 and a fourth end 10b connected directly in a rotatable manner to the crank 7, in a position distinct from the first further end 7a and the second further end 7b. Still, the connecting rod 6 is also rotatably constrained to the frame 4 at its first end 6a.

In such configuration, the distance variation means 11 allow the user to obtain multiple variations of the attitude of the motorcycle, simply by increasing or decreasing the distance between the two ends 6a, 6b of the connecting rod 6. Moreover, the distance variation D between the two ends 6a, 6b also allows to raise or lower the height of the motorcycle at the will of the user, depending on his needs and on the road to be traveled.

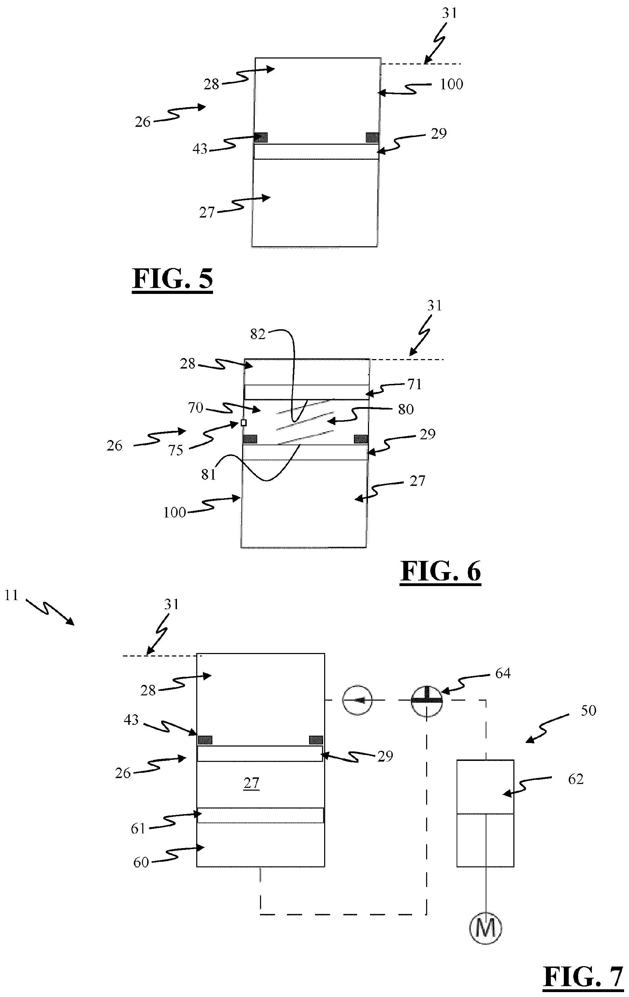

Moreover, the distance variation means 11 also act as a sort of additional suspension with respect to the damper 10 by implementing a series of functions, as will become clearer from the description of the various distance adjustment means 11 described in figures 5 to 9b. In practice, the adjustment means 11 can be operated with the motorcycle stopped without the possibility to be able to modify the distance of the two ends 6a, 6b while the motorcycle is running, or can work dynamically while the motorcycle is running, both following an activation by means of outer supply sources (i.e. electric motor) or following the compression of elastic elements contained inside the adjustment means (as will become clearer in the description hereunder).

Although not shown in figure 1, in an alternative embodiment, the fourth end 10b of the fluidic damper 10 can be connected directly or indirectly in a rotatable manner to the same connecting rod 6, in a position distinct from the first end 6a and the second end 6b.

A further embodiment of the invention is shown in figure 2. Unlike the first embodiment, in this embodiment the crank 7 comprises means 11 to vary the distance D in a static and/or dynamic way respectively between the further first end 7a and further second end 7b of the crank.

In this embodiment, the damper 10 has a third end 10a connected indirectly in a rotatable manner to the frame 4 and a fourth end 10b connected directly or indirectly in a rotatable manner to the connecting rod 6, in a position distinct from the first end 6a and second end 6b. Also in this case, the connecting rod 6 is also rotatably constrained to the frame 4 at the first end 6a.

Although not shown in figure 2, in an alternative embodiment the fourth end 10b of the fluidic damper 10 can be connected directly in a rotatable manner to the same crank 7, in a position distinct from the further first end 7a and further second end 7b.

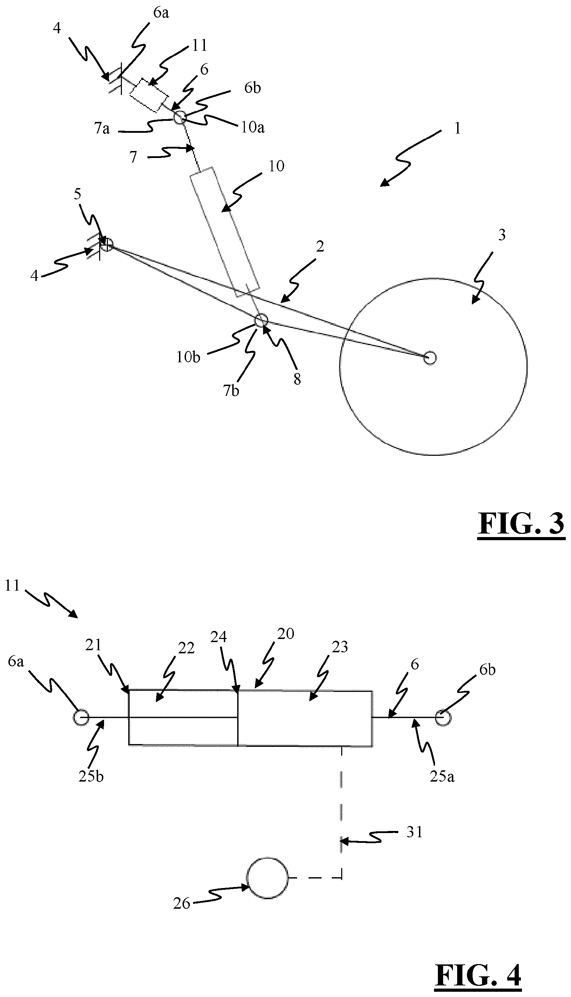

In a third embodiment of the invention shown in figure 3, the crank 7 comprises a first damper 10 having a third end 10a connected directly or indirectly in a rotatable manner to the connecting rod 6 at the second end 6b, and a fourth end 10b connected directly or indirectly in a rotatable manner to the swingarm 2 at a point different from the first pivot pin 5. Thus, in particular, the crank 7 is in fact the damper 10 and, thus, the further first end 7a coincides with the third end 10a, while the further second end 7b coincides with the fourth end 10b. The distance variation means 11 are thus arranged at the connecting element 6. The connecting rod 6 comprises the variation means 11 of the distance D. In practice, the crank 7 comprises the damper 10 and the end points 7a, 7b of the crank 7 thus correspond to the end points 10a, 10b of the damper 10.

It should be noted that the term crank 7 must be understood as an element, or a second connecting rod, able to ensure the operation of the kinematic system in which it is inserted.

In all other embodiments of the invention described above, the distance variation means 11 comprise a fluid-transfer device 20. Such fluid-transfer device 20 comprises a cylinder 21 having a first chamber 22 and a second chamber 23 and a piston 24 which slides within the cylinder 21 thus varying the dimensions of the first chamber 22 and the second chamber 23. The cylinder 21 is also directly or indirectly integral with a first portion 25a of the connecting rod 6, in the case of the first and third embodiments of the invention, or of the crank 7, in the case of the second embodiment of the invention, and the piston 24 is directly or indirectly integral with a second portion 25b of the connecting rod 6, in the case of the first and third embodiments of the invention, or of the crank 7, in the case of the second embodiment of the invention. It should be noted that whenever the piston 24 is integral with the first portion 25a and the cylinder 21 is integral with the second portion 25b, the solution thus obtained would anyhow fall within the protection scope of the present invention.

Still, although not shown herein, said distance variation means 11 can also comprise at least one elastic element functionally combined with the transfer device 20 and acting for at least part of the stroke of the piston 24 with respect to said cylinder 21. According to such embodiment not shown, such elastic element is a spring coaxial to the cylinder 21 of the transfer device 20, or also an elastomer or other similar means.

According to the embodiments described in figures 5 to 9b, the distance variation means 11 comprise a gas spring 26 functionally combined with the second chamber 23 and/or the first chamber 22 of the cylinder 21. The gas spring 26 in turn comprises a third chamber 27 and a fourth chamber 28. Such third chamber 27 contains a gas such as, for example, air. Moreover, the third chamber 27 and the fourth chamber 28 are separated from each other, directly or indirectly, by a dividing wall 29 which is sliding, or deformable, in such a way to vary the volume of the third chamber 27 and fourth chamber 28 depending on the position of the piston 24 with respect to the cylinder 21 to vary the volume, or pressure, of the gas within the third chamber 27.

Still, the fourth chamber 28 is in fluidic communication with the second chamber 23. The fourth chamber 28 and the second chamber 23 contain an incompressible fluid that is transferred between the second chamber 23 and the fourth chamber 28, and vice versa, according to the variation of the position of the piston 24 with respect to the cylinder 21. The dividing wall 29 is also sliding or deformable depending on the volume of incompressible fluid transferred from the second chamber 23 to the fourth chamber 28 and vice versa (see figures 4 and 5).

According to the embodiment described in figure 5, the third chamber 27 and the fourth chamber 28 are formed inside a tank 100 and the dividing wall 29 is slidable, or deformable, within the tank 100 to define the extent of the third chamber 27 and the fourth chamber 28. In practice, the gas spring 26 is separated from the transfer device 20.

A limit stop 43, able to impede the displacement of the dividing wall 29 whenever the gas inside the third chamber increases in pressure, is also present inside the tank 100. Such limit stop 43 is arranged at about half the tank 100. This ensures the possibility to pre-compress the gas, the length of the cylinder 21 of the fluid-transfer device 20 being the same.

In this embodiment, the transfer device 20 comprises a duct 31 for fluidically connecting the fourth chamber 28 to the second chamber 23 for transferring the incompressible fluid between the second chamber 23 and the fourth chamber 28, and vice versa. Such duct 31 is outside both the transfer device 20 and the gas spring 26.

Such solution allows to make the distance adjustment means 11 work so as to constitute, in addition to a system for easily varying the static geometries of the suspension of the motorcycle, a system for varying the overall stiffness of the suspension depending on the load, in particular for significantly decreasing the stiffness at the exceeding of the load produced by the pressure of the gas contained within the third chamber 27 and acting on the membrane or separator 29.

An embodiment similar to that of figure 5 is shown in figure 6. In this solution, the gas spring 26 also comprises a further chamber 70 connected by means of the hole 75 to the outer environment and arranged between the third chamber 27 and the fourth chamber 28, and at least one further dividing wall 71 to separate the further chamber 70 from the fourth chamber 28. The gas spring 26 also comprises an elastic spring 80 having a first end 81 resting on the first dividing wall 29 and a second end 82 resting on the further dividing wall 71. The further chamber 70 and the further dividing wall are in turn arranged within the tank 100.

It should be noted that in another embodiment not shown herein, the hole 75 may also not be present, without thereby departing from the protection scope of the present invention.

In this solution, the elastic spring 80 replaces a possible elastic element combined with the fluid-transfer device 20, thus making the solution even more compact.

Another embodiment, in which the gas spring 26 comprises a fifth chamber 60 and a second dividing wall 61 to separate the third chamber 27 from the fifth chamber 60, is shown in figure 7. The second dividing wall 61 is sliding, or deformable, in such a way to vary the volume of the third chamber 27 and of the fifth chamber 60. The fifth chamber 60 and the second dividing wall 61 are in turn arranged within the tank 100.

In the embodiments described above, the gas spring 26 can comprise first means 50 to adjust the pressure of the gas within the third chamber 27.

In particular, such embodiment is shown only in figure 7 but can however also be implemented in the solutions shown in figures 5 and 6.

An embodiment in which the first adjustment means 50 also comprise at least one sixth chamber 62 fluidically connected to the fifth chamber 60 is on the other hand shown in figure 7. The sixth chamber 62 and the fifth chamber 60 contain an incompressible fluid. Such incompressible fluid is transferred by the first adjustment means 50 between the fifth chamber 60 and the sixth chamber 62, and vice versa. The second dividing wall 61 is also sliding, or deformable, depending on the volume of incompressible fluid transferred from the fifth chamber to the sixth chamber, and vice versa.

In such embodiment, the first means 50 comprise an actuator for fluidically connecting the sixth chamber 62, the fifth chamber 60 and the fourth chamber 28 to each other, and a three-way valve 64 for distributing the incompressible fluid between the fifth chamber 60 and the fourth chamber 28. Such solution allows to control the pressure changes of the incompressible liquid present within the fifth chamber 60 and the fourth chamber 28, as well as the pressure of the gas present within the third chamber 27, with a single actuator. In the light of this, the characteristics of pressure and volume of the gas contained within the third chamber 27 are closely connected to the characteristics of the fluid contained within the fourth chamber 28 or the second chamber 23, since the latter is fluidically connected to the fourth chamber.

Such solution thus allows to adjust the following characteristics of the adjustment device independently: static length D between the ends 25b and 25a, which determine the basic attitude of the vehicle, and the pressure and volume of the gas within the chamber 27, which instead regulate the dynamic characteristics of the suspension as a whole.

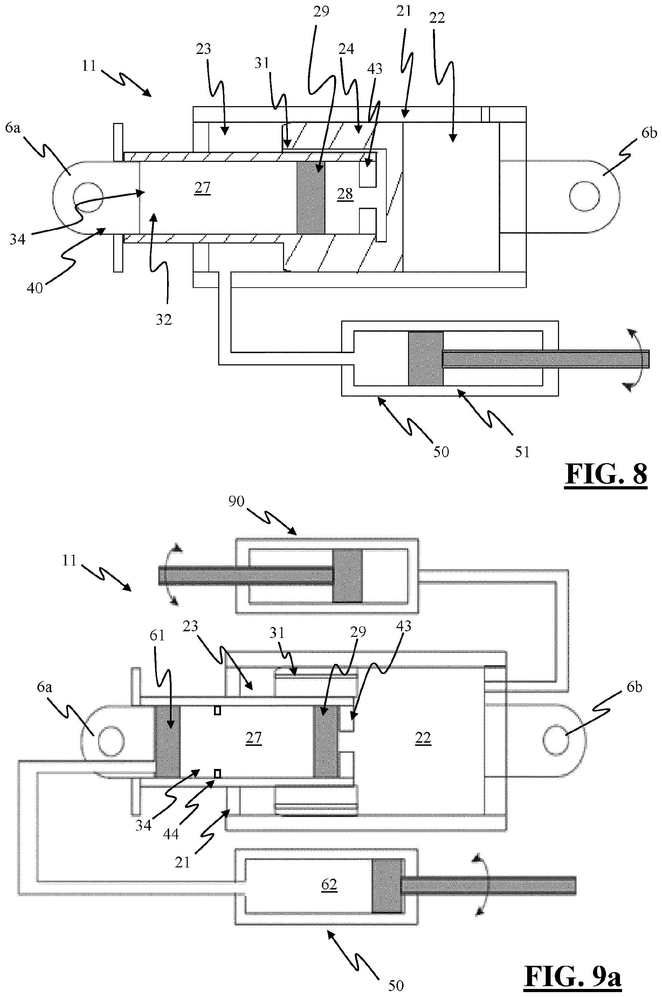

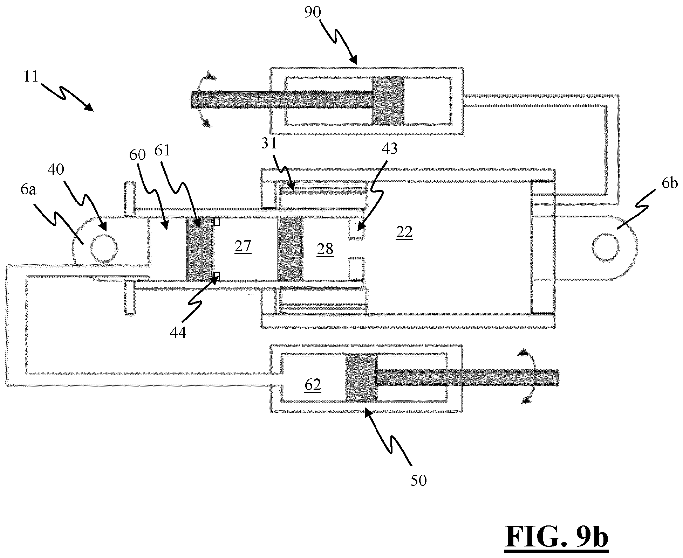

In alternative to the embodiment described above, the transfer device 10 comprises second means 90 for adjusting the pressure of the incompressible fluid contained within the second chamber 23 (and thus also within the fourth chamber 28), whereas the first means 50 would thus only adjust the pressure of the fluid contained within the third chamber 27 (also see figures 9a and 9b).

In the embodiments described above, the first chamber 22 of the transfer device 20 can contain air and be fluidically connected to the outer environment.

According to the embodiment described in figure 8, the transfer device 20 comprises a rod 40 integrally combined with the piston 24 and adapted to make the piston 24 slide inside the cylinder 21. The end 6a of the rod is also the end of the connecting element 6. The rod 40 is provided with an inner housing 32. Such inner housing 32 comprises the third chamber 27, the fourth chamber 28 and the dividing wall 29 of the aforementioned gas spring 26. This way, the gas spring 26 is thus not outside the fluid-transfer device 20 but inside it, thus significantly reducing the volume of the adjustment means 11. Moreover, the duct 31 is made at least partially within the rod 40 and the piston 24 to fluidically connect the second chamber 23 to the fourth chamber 28.

As described above, also in this case, the housing 32 has a limit stop 43 able to impede the displacement of the dividing wall 29 whenever the gas inside the third chamber 27 increases in pressure. Such limit stop 43 is arranged at an end of the housing 32.

Also in such embodiment, the first chamber 22 of the transfer device 20 can contain air and be fluidically connected to the outer environment. Moreover, the first chamber 22 of the cylinder 21 is fluidically separated from the second chamber 23. Although not shown herein, the housing 32 could contain a gas spring 26 of the type shown in figure 6 and described above therein. The first adjustment means 50 can comprise an actuator 51 that adjusts the pressure of the incompressible liquid within the first chamber 23 and thus within the fourth chamber 28 and, ultimately, also the pressure of the gas within the third chamber 27.

Still, the housing 32, in an alternative manner, could contain a gas spring 26 of the type shown in figure 7 and described above with the presence of first means 50 that comprise an actuator for fluidically connecting the sixth chamber 62, the fifth chamber 60 and the fourth chamber 28 to each other, and a three-way valve 64 for distributing the incompressible fluid between the fifth chamber 60 and the fourth chamber 28.

In alternative to the embodiment described above, the adjustment means 11 can comprise second means 90 for adjusting the pressure of the incompressible fluid contained within the second chamber 23 (and thus also within the fourth chamber 28), whereas the first means 50 would thus only adjust the pressure of the fluid contained within the fifth chamber 60 and thus ultimately within the third chamber 27. This way, the first adjustment means 50 and the second adjustment means 90 would be independent of each other.

Also in this embodiment, the first chamber 22 contains air and is fluidically connected to the outer environment.

According to the embodiment of the invention defined by claim 1 and shown in figures 9a and 9b, the first chamber 22 of the cylinder 21 is this time fluidically connected to the second chamber 23 by means of the duct 31.

Also in this embodiment, the housing 32 comprises a hole 34 formed within the rod 40. Moreover, the distance adjustment means 11 comprise first means 50 to adjust the gas pressure within the third chamber 27. In this regard, the gas spring 26 of figures 9a and 9b comprises a fifth chamber 60 and a second dividing wall 61 to separate the third chamber 27 from the fifth chamber 60. The second dividing wall 61 is thus sliding, or deformable, so as to vary the volume of the third chamber 27 and of the fifth chamber 60. The fifth chamber 60 and the second dividing wall 61 are arranged within the hole formed in the housing 32.

The housing 32 thus also has a second limit stop 44 arranged at a precise distance from the end of the housing 32. This ensures the possibility to pre-compress the gas, the length of the cylinder 21 of the fluid-transfer device 20 being the same.

The first adjustment means 50 also comprise a sixth chamber 62 fluidically connected to the fifth chamber 60. The sixth chamber 62 and the fifth chamber 60 contain an incompressible fluid that is transferred by the first adjustment means 50 between the fifth chamber 60 and the sixth chamber 62 and vice versa. The second dividing wall 61 is further sliding or deformable, depending on the volume of incompressible fluid transferred from the fifth chamber 60 to the sixth chamber 62, and vice versa.

The transfer device 10 also comprises second means 90 for adjusting the pressure of the incompressible fluid of the first 22 and second 23 chambers.

Figure 9b shows how the first adjustment means 50, once activated, have caused the reduction of the third chamber 27, i.e. the compression of the gas of the gas spring 26. Simultaneously, the second means 90 are activated so as to introduce oil both into the first chamber 22 and the second chamber 23. This causes the increase of the distance D both between the two ends 6a, 6b of the connecting element 6, whenever it is provided with distance adjustment means 11, or between the two ends 7a, 7b of the crank 7, whenever the latter is provided with means 11 for adjusting the distance.

The first adjustment means 50 also comprise a sixth chamber 62 fluidically connected to the fifth chamber 60. The sixth chamber 62 and the fifth chamber 60 contain an incompressible fluid that is transferred by the first adjustment means 50 between the fifth chamber 60 and the sixth chamber 62 and vice versa. The second dividing wall 61 is further sliding or deformable, depending on the volume of incompressible fluid transferred from the fifth chamber 60 to the sixth chamber 62, and vice versa.

In an embodiment not shown herein, alternative to the one described above and shown in figure 9a, the gas spring 26 can also comprise a further chamber 70 connected to the outer environment and arranged between the third chamber 27 and the fourth chamber 28 and at least one further dividing wall 71 to separate the further chamber 70 from the fourth chamber 28. The gas spring 26 also comprises an elastic spring 80 having a first end 81 resting on the first dividing wall 29 and a second end 82 resting on the further dividing wall 71.

## Claims

1. Oscillation system (1) of a swingarm (2) of a back wheel (3) with respect to the frame (4) of a two-wheeled vehicle, wherein said swingarm is rotatably constrainable to said frame at a first pin (5), said system comprising at least one connecting rod (6) and at least one crank (7), wherein said connecting rod (6) comprises a first end (6a) connectable to said frame and a second end (6b) rotatably constrained to said crank (7) at a further first end (7a) of said crank (7), and wherein said crank (7) comprises a further second end (7b) rotatably constrained to said swingarm at a second pin (8) distinct from said first pin (5), wherein said connecting rod (6) and/or said crank (7) comprise(s) means (11) to vary the distance (D) in a static and/or dynamic manner between said first end (6a) and said second end (6b) of said connecting rod (6), respectively, and/or between said further first end (7a) and said further second end (7b) of said crank (7), said distance variation means (11) comprising at least one fluid-transfer device (20), said fluid-transfer device comprising a cylinder (21) having a first chamber (22) and a second chamber (23), and a piston (24) sliding within said cylinder (21) thus varying the dimensions of said first chamber and said second chamber, and wherein said cylinder (21) is directly or indirectly integral with a first portion (25a) of said connecting rod (6), or of said crank (7), and said piston (24) is directly or indirectly integral with a second portion (25b) of said connecting rod (6), or of said crank (7), and wherein said distance variation means (11) comprise a gas spring (26) functionally combined with said second chamber (23) and/or with said first chamber (22) of said cylinder (21), wherein said gas spring comprises a third chamber (27) and a fourth chamber (28), said third chamber (27) containing a gas, wherein said third chamber (27) and said fourth chamber (28) are separated from each other, directly or indirectly, by at least one dividing wall (29) which is sliding, or deformable, in such a way to vary the volume of said third chamber (27) and said fourth chamber (28) depending on the position of said piston (24) with respect to said cylinder (21) to vary the volume, or pressure, of the gas within said third chamber (27), wherein said fourth chamber (28) is in fluidic communication with said second chamber (23), said fourth chamber (28) and said second chamber (23) containing an incompressible fluid, said incompressible fluid being transferred between said second chamber (23) and said fourth chamber (28) and vice versa, as the position of said piston (24) with respect to said cylinder (21) varies, said at least one dividing wall (29) also being sliding or deformable depending on the volume of incompressible fluid transferred from said second chamber (23) to said fourth chamber (28) and vice versa, wherein said transfer device (20) comprises at least one duct (31) for fluidically connecting said fourth chamber (28) to said second chamber (23) for transferring said incompressible fluid between said second chamber (23) and said fourth chamber (28), and vice versa, said transfer device (20) comprising a rod (40) integrally combined with said piston (24) and adapted to slide said piston within said cylinder (21), said oscillation system (1) being **characterized in that** said rod (40) is provided with an inner housing (32) comprising a hole (34) formed within said rod (40), said inner housing comprising said third chamber (27), said fourth chamber (28) and said dividing wall (29), said duct (31) being made at least partially within said rod and/or said piston (24) to fluidically connect said second chamber (23) to said fourth chamber (28), and **in that** said gas spring comprises first adjustment means (50) for adjusting the pressure of said gas within said third chamber (27), said gas spring comprising a fifth chamber (60) and at least one second dividing wall (61) to separate said third chamber (27) from said fifth chamber (60), said second dividing wall (61) being sliding or deformable, so as to vary the volume of said third chamber (27) and said fifth chamber (60), said fifth chamber (60) and said second dividing wall (61) being arranged within said hole (34), said first adjustment means (50) also comprising a sixth chamber (62) fluidically connected to said fifth chamber (60), said sixth chamber (62) and said fifth chamber (60) containing an incompressible fluid, said incompressible fluid being transferred by said first adjustment means (50) between said fifth chamber (60) and said sixth chamber (62) and vice versa, said at least one second dividing wall (61) being further sliding or deformable, depending on the volume of incompressible fluid transferred from said fifth chamber to said sixth chamber, and vice versa.

2. System according to claim 1, **characterized in that** it comprises a first damper (10) having a third end (10a) connectable directly, or indirectly, in a rotatable manner to said frame (4) and a fourth end (10b) connected directly or indirectly in a rotatable manner to said connecting rod (6), or to said crank (7), in a position distinct from said first end and said second end, or from said further first end and said further second end, said connecting rod (6) being further rotatably constrainable to said frame (4) at said first end (6a).

3. System according to claim 1, **characterized in that** said crank (7) comprises a first damper (10) having a third end (10a) connected directly or indirectly in a rotatable manner to said connecting rod (6) at said second end, and a fourth end (10b) connected directly or indirectly in a rotatable manner to said swingarm (2) at a point different from said first pivot pin (5).

4. System according to any of claims 1 to 3, **characterized in that** said first chamber of said cylinder is fluidically separated from said second chamber.

5. System according to any of claims 1 to 3, **characterized in that** said first chamber (22) of said cylinder (21) is fluidically connected to said second chamber (23) by means of said duct (31).

6. System (1) according to any of claims 1 to 5, **characterized in that** said gas spring also comprises a further chamber (70), preferably connected to the outer environment, arranged between said third chamber (27) and said fourth chamber (28) and at least one further dividing wall (71) to separate said further chamber (70) from said fourth chamber (28), said gas spring also comprising at least one elastic spring (80) having a first end (81) resting on said first dividing wall (29) and a second end (82) resting on said further dividing wall (71).

7. System (1) according to any of claims 1 to 6, **characterized in that** said first adjustment means (50) comprise an actuator for fluidically connecting said sixth chamber (62) to said fifth chamber (60) and to said fourth chamber (28) and/or said first chamber (22), and at least one valve (64) for distributing said incompressible fluid between said fifth chamber (60) and said fourth chamber (28) and/or said first chamber (22).

8. System (1) according to any of claims 1 to 7, **characterized in that** said transfer device (10) comprises second means (90) to adjust the pressure of the incompressible fluid of said first chamber (22) and/or said second chamber (23) and/or, directly or indirectly, the pressure of said gas within said third chamber (27).

9. Two-wheeled vehicle comprising a frame (4), at least one back wheel (3), a swingarm (2) for said back wheel (3) and an oscillation system of the swingarm (2) with respect to said frame (4) according to any of claims 1-8.

## Patentansprüche

1. Schwingungssystem (1) eines Schwenkarm (2) eines Hinterrads (3) bezüglich des Rahmens (4) eines zweirädrigen Fahrzeugs, wobei der Schwenkarm über einen ersten Bolzen (5) drehbar an dem Rahmen einschränkbar ist, wobei das System mindestens eine Verbindungsstange (6) und mindestens eine Kurbel (7) umfasst, wobei die Verbindungsstange (6) ein erstes Ende (6a) aufweist, das mit dem Rahmen verbindbar ist, und ein zweites Ende (6b), das drehbar an der Kurbel (7) an einem weiteren ersten Ende (7a) der Kurbel (7) eingeschränkt ist, und wobei die Kurbel (7) ein weiteres zweites Ende (7b) umfasst, das an einem zweiten Bolzen (8) drehbar an dem Schwenkarm eingeschränkt ist, der von dem ersten Bolzen (5) verschieden ist, wobei die Verbindungsstange (6) und/oder die Kurbel (7) Mittel (11) zur statischen und/oder dynamischen Variierung des Abstands (D) zwischen dem ersten Ende (6a) und dem zweiten Ende (6b) der Verbindungsstange (6) und/oder zwischen dem weiteren ersten Ende (7a) und dem weiteren zweiten Ende (7b) der Kurbel (7) umfasst/umfassen, wobei die Abstandsvariationsmittel (11) mindestens eine Fluidübertragungsvorrichtung (20) umfassen, wobei die Fluidübertragungsvorrichtung einen Zylinder (21) mit einer ersten Kammer (22) und einer zweiten Kammer (23) sowie einen Kolben (24) umfasst, der innerhalb des Zylinders (21) gleitet und somit die Abmessungen der ersten Kammer und der zweiten Kammer variieren, und wobei der Zylinder (21) direkt oder indirekt integral mit einer ersten Portion (25a) der Verbindungsstange (6) oder der Kurbel (7) ist und der Kolben (24) direkt oder indirekt integral mit einer zweiten Portion (25b) der Verbindungsstange (6) oder der Kurbel (7) ist und wobei die Abstandsvariationsmittel (11) eine Gasfeder (26) umfassen, die funktionell mit der zweiten Kammer (23) und/oder mit der ersten Kammer (22) des Zylinders (21) kombiniert ist, wobei die Gasfeder eine dritte Kammer (27) und eine vierte Kammer (28) umfasst, wobei die dritte Kammer (27) ein Gas enthält, wobei die dritte Kammer (27) und die vierte Kammer (28) direkt oder indirekt durch mindestens eine Trennwand (29) voneinander getrennt sind, die gleitend oder verformbar ist, um das Volumen der dritten Kammer (27) und der vierten Kammer (28) in Abhängigkeit von der Position des Kolbens (24) bezüglich des Zylinders (21) zu variieren, um das Volumen oder den Druck des Gases innerhalb der dritten Kammer (27) zu variieren, wobei die vierte Kammer (28) in Fluidverbindung mit der zweiten Kammer (23) ist, wobei die vierte Kammer (28) und die zweite Kammer (23) ein inkompressibles Fluid enthalten, wobei das inkompressible Fluid zwischen der zweiten Kammer (23) und der vierten Kammer (28) und umgekehrt übertragen wird, wenn sich die Position des Kolbens (24) bezüglich des Zylinders (21) variiert, wobei die mindestens eine Trennwand (29) ebenfalls gleitend oder verformbar ist, abhängig vom Volumen des inkompressiblen Fluids, das von der zweiten Kammer (23) zur vierten Kammer (28) und umgekehrt übertragen wird, wobei die Fluidübertragungsvorrichtung (20) mindestens einen Kanal (31) zur fluidischen Verbindung der vierten Kammer (28) mit der zweiten Kammer (23) zur Übertragung des inkompressiblen Fluids zwischen der zweiten Kammer (23) und der vierten Kammer (28) und umgekehrt umfasst, wobei die Fluidübertragungsvorrichtung (20) eine Stange (40) umfasst, die integral mit dem Kolben (24) kombiniert und angepasst, um den Kolben innerhalb des Zylinders (21) zu gleiten, wobei das Schwingungssystem (1) **dadurch gekennzeichnet ist, dass** die Stange (40) ein inneres Gehäuse (32) aufweist, das ein innerhalb der Stange (40) ausgebildetes Loch (34) umfasst, wobei das innere Gehäuse die dritte Kammer (27), die vierte Kammer (28) und die Trennwand (29) umfasst, wobei der Kanal (31) zumindest teilweise innerhalb der Stange und/oder des Kolbens (24) ausgebildet ist, um die zweite Kammer (23) fluidisch mit der vierten Kammer (28) zu verbinden, und dass die Gasfeder erste Einstellmittel (50) zur Einstellung des Drucks des Gases innerhalb der dritten Kammer (27) umfasst, wobei die Gasfeder eine fünfte Kammer (60) und mindestens eine zweite Trennwand (61) zur Trennung der dritten Kammer (27) von der fünften Kammer (60) umfasst, wobei die zweite Trennwand (61) gleitend oder verformbar ist, um das Volumen der dritten Kammer (27) und der fünften Kammer (60) zu variieren, wobei die fünfte Kammer (60) und die zweite Trennwand (61) innerhalb des Loches (34) angeordnet sind, wobei die ersten Einstellmittel (50) ferner eine sechste Kammer (62) umfassen, die fluidisch mit der fünften Kammer (60) verbunden ist, wobei die sechste Kammer (62) und die fünfte Kammer (60) ein inkompressibles Fluid enthalten, wobei das inkompressible Fluid durch die ersten Einstellmittel (50) zwischen der fünften Kammer (60) und der sechsten Kammer (62) und umgekehrt übertragen wird, wobei die mindestens eine zweite Trennwand (61) ferner gleitend oder verformbar ist, abhängig vom Volumen des übertragenden inkompressiblen Fluids zwischen der fünften Kammer und der sechsten Kammer und umgekehrt.

2. System nach Anspruch 1, **dadurch gekennzeichnet, dass** es einen ersten Dämpfer (10) umfasst, der ein drittes Ende (10a) aufweist, das direkt oder indirekt drehbar mit dem Rahmen (4) verbindbar ist, und ein viertes Ende (10b), das direkt oder indirekt drehbar mit der Verbindungsstange (6) oder mit der Kurbel (7) verbunden ist, und zwar in einer Position, die sich von dem ersten Ende und dem zweiten Ende oder von dem weiteren ersten Ende und dem weiteren zweiten Ende unterscheidet, wobei die Verbindungsstange (6) ferner an ihrem ersten Ende (6a) drehbar an dem Rahmen (4) einschränkbar ist.

3. System nach Anspruch 1, **dadurch gekennzeichnet, dass** die Kurbel (7) einen ersten Dämpfer (10) umfasst, der ein drittes Ende (10a) aufweist, das direkt oder indirekt drehbar mit der Verbindungsstange (6) an deren zweitem Ende verbunden ist, und ein viertes Ende (10b), das direkt oder indirekt drehbar mit dem Schwenkarm (2) an einem anderen Punkt als dem ersten Drehzapfen (5) verbunden ist.

4. System nach einem der Ansprüche 1 bis 3, **dadurch gekennzeichnet, dass** die erste Kammer des Zylinders fluidisch von der zweiten Kammer getrennt ist.

5. System nach einem der Ansprüche 1 bis 3, **dadurch gekennzeichnet, dass** die erste Kammer (22) des Zylinders (21) mittels des Kanals (31) fluidisch mit der zweiten Kammer (23) verbunden ist.

6. System (1) nach einem der Ansprüche 1 bis 5, **dadurch gekennzeichnet, dass** die Gasfeder ferner eine weitere Kammer (70) umfasst, die bevorzugter mit der äußeren Umgebung verbunden ist, die zwischen der dritten Kammer (27) und der vierten Kammer (28) angeordnet ist, und mindestens eine weitere Trennwand (71) zur Trennung der weiteren Kammer (70) von der vierten Kammer (28), wobei die Gasfeder ferner mindestens eine elastische Feder (80) umfasst, deren erstes Ende (81) auf der ersten Trennwand (29) aufliegt und deren zweites Ende (82) auf der weiteren Trennwand (71) aufliegt.

7. System (1) nach einem der Ansprüche 1 bis 6, **dadurch gekennzeichnet, dass** die ersten Einstellmittel (50) einen Aktuator zur fluidischen Verbindung der sechsten Kammer (62) mit der fünften Kammer (60) und mit der vierten Kammer (28) und/oder der ersten Kammer (22) sowie mindestens ein Ventil (64) zur Verteilung des inkompressiblen Fluids zwischen der fünften Kammer (60) und der vierten Kammer (28) und/oder der ersten Kammer (22) umfassen.

8. System (1) nach einem der Ansprüche 1 bis 7, **dadurch gekennzeichnet, dass** die Fluidübertragungsvorrichtung (10) zweite Mittel (90) zur Einstellung des Drucks des inkompressiblen Fluids der ersten Kammer (22) und/oder der zweiten Kammer (23) und/oder, direkt oder indirekt, des Drucks des Gases innerhalb der dritten Kammer (27) umfasst.

9. Zweirädriges Fahrzeug mit einem Rahmen (4), mindestens einem Hinterrad (3), einem Schwenkarm (2) für das Hinterrad (3) und einem Schwingungssystem des Schwenkarms (2) bezüglich des Rahmens (4) nach einem der Ansprüche 1 bis 8.

## Revendications

1. Système d'oscillation (1) d'un bras oscillant (2) d'une roue arrière (3) par rapport au châssis (4) d'un véhicule à deux roues, dans lequel ledit bras oscillant est contraint en rotation audit châssis au niveau d'un premier axe (5), ledit système comprenant au moins une bielle (6) et au moins une manivelle (7), dans lequel ladite bielle (6) comprend une première extrémité (6a) reliée audit cadre et une deuxième extrémité (6b) contrainte en rotation à ladite manivelle (7) à une autre première extrémité (7a) de ladite manivelle (7), et dans lequel ladite manivelle (7) comprend une autre deuxième extrémité (7b) contrainte en rotation audit bras oscillant à un second axe (8) distinct dudit premier axe (5), dans lequel ladite bielle (6) et/ou ladite manivelle (7) comporte(nt) des moyens (11) pour faire varier la distance (D) de manière statique et/ou dynamique entre ladite première extrémité (6a) et ladite deuxième extrémité (6b) de ladite bielle (6), respectivement, et/ou entre ladite autre première extrémité (7a) et ladite autre deuxième extrémité (7b) de ladite manivelle (7), lesdits moyens de variation de distance (11) comprenant au moins un dispositif de transfert de fluide (20), ledit dispositif de transfert de fluide comprenant un cylindre (21) ayant une première chambre (22) et une deuxième chambre (23), et un piston (24) coulissant à l'intérieur dudit cylindre (21) faisant ainsi varier les dimensions de ladite première chambre et de ladite deuxième chambre, et dans lequel ledit cylindre (21) est directement ou indirectement solidaire d'une première portion (25a) de ladite bielle (6), ou de ladite manivelle (7), et ledit piston (24) est directement ou indirectement solidaire d'une deuxième partie (25b) de ladite bielle (6), ou de ladite manivelle (7), et dans lequel lesdits moyens de variation de distance (11) comprennent un ressort à gaz (26) fonctionnellement combiné avec ladite deuxième chambre (23) et/ou avec ladite première chambre (22) dudit cylindre (21), dans lequel ledit ressort à gaz comprend une troisième chambre (27) et une quatrième chambre (28), ladite troisième chambre (27) contenant un gaz, dans lequel ladite troisième chambre (27) et ladite quatrième chambre (28) sont séparées l'une de l'autre, directement ou indirectement, par au moins une paroi de séparation (29) qui est coulissante ou déformable, de manière à faire varier le volume de ladite troisième chambre (27) et de ladite quatrième chambre (28) en fonction de la position dudit piston (24) par rapport audit cylindre (21) pour faire varier le volume, ou la pression, du gaz à l'intérieur de ladite troisième chambre (27), dans lequel ladite quatrième chambre (28) est en communication fluidique avec ladite deuxième chambre (23), ladite quatrième chambre (28) et ladite deuxième chambre (23) contenant un fluide incompressible, ledit fluide incompressible étant transféré entre ladite deuxième chambre (23) et ladite quatrième chambre (28) et vice versa, lorsque la position dudit piston (24) par rapport audit cylindre (21) varie, ladite au moins une paroi de séparation (29) étant également coulissante ou déformable en fonction du volume de fluide incompressible transféré de ladite deuxième chambre (23) vers ladite quatrième chambre (28) et vice versa, dans lequel ledit dispositif de transfert (20) comprend au moins un conduit (31) pour relier fluidiquement ladite quatrième chambre (28) à ladite deuxième chambre (23) pour transférer ledit fluide incompressible entre ladite deuxième chambre (23) et ladite quatrième chambre (28), et vice versa, ledit dispositif de transfert (20) comprenant une tige (40) combinée intégralement avec ledit piston (24) et adaptée pour faire coulisser ledit piston à l'intérieur dudit cylindre (21), ledit système d'oscillation (1) étant **caractérisé en ce que** ladite tige (40) est pourvue d'un boîtier intérieur (32) comprenant un trou (34) formé à l'intérieur de ladite tige (40), ledit boîtier intérieur comprenant ladite troisième chambre (27), ladite quatrième chambre (28) et ladite paroi de séparation (29), ledit conduit (31) étant réalisé au moins partiellement à l'intérieur de ladite tige et/ou dudit piston (24) pour relier fluidiquement ladite deuxième chambre (23) à ladite quatrième chambre (28), et **en ce que** ledit ressort à gaz comprend des premiers moyens de réglage (50) pour régler la pression dudit gaz à l'intérieur de ladite troisième chambre (27), ledit ressort à gaz comprenant une cinquième chambre (60) et au moins une deuxième paroi de séparation (61) pour séparer ladite troisième chambre (27) de ladite cinquième chambre (60), ladite deuxième paroi de séparation (61) étant coulissante ou déformable, de manière à faire varier le volume de ladite troisième chambre (27) et de ladite cinquième chambre (60), ladite cinquième chambre (60) et ladite deuxième paroi de séparation (61) étant disposées à l'intérieur dudit trou (34), lesdits premiers moyens de réglage (50) comprenant également une sixième chambre (62) reliée fluidiquement à ladite cinquième chambre (60), ladite sixième chambre (62) et ladite cinquième chambre (60) contenant un fluide incompressible, ledit fluide incompressible étant transféré par ledit premier moyen de réglage (50) entre ladite cinquième chambre (60) et ladite sixième chambre (62) et vice versa, ladite au moins une deuxième paroi de séparation (61) étant en outre coulissante ou déformable, en fonction du volume de fluide incompressible transféré de ladite cinquième chambre à ladite sixième chambre, et vice versa.

2. Système selon la revendication 1, **caractérisé en ce qu'**il comprend un premier amortisseur (10) ayant une troisième extrémité (10a) pouvant être reliée directement, ou indirectement, de manière rotative audit cadre (4) et une quatrième extrémité (10b) reliée directement ou indirectement de manière rotative à ladite bielle (6), ou à ladite manivelle (7), dans une position distincte de ladite première extrémité et de ladite deuxième extrémité, ou de ladite autre première extrémité et de ladite autre deuxième extrémité, ladite bielle (6) étant en outre contrainte en rotation audit châssis (4) à ladite première extrémité (6a).

3. Système selon la revendication 1, **caractérisé en ce que** ladite manivelle (7) comprend une première amortisseur (10) ayant une troisième extrémité (10a) reliée directement ou indirectement de manière rotative à ladite bielle (6) à ladite deuxième extrémité, et une quatrième extrémité (10b) reliée directement ou indirectement de manière rotative audit bras oscillant (2) en un point différent dudit premier axe de pivotement (5).

4. Système selon l'une quelconque des revendications 1 à 3, **caractérisé en ce que** ladite première chambre dudit cylindre est séparée fluidiquement de ladite deuxième chambre.

5. Système selon l'une quelconque des revendications 1 à 3, **caractérisé en ce que** ladite première chambre (22) dudit cylindre (21) est reliée fluidiquement à ladite deuxième chambre (23) au moyen dudit conduit (31).

6. Système (1) selon l'une quelconque des revendications 1 à 5, **caractérisé en ce que** ledit ressort à gaz comprend également une autre chambre (70), de préférence reliée à l'environnement extérieur, disposée entre ladite troisième chambre (27) et ladite quatrième chambre (28) et au moins une autre paroi de séparation (71) pour séparer ladite autre chambre (70) de ladite quatrième chambre (28), ledit ressort à gaz comprenant également au moins un ressort élastique (80) ayant une première extrémité (81) reposant sur ladite première paroi de séparation (29) et une deuxième extrémité (82) reposant sur ladite autre paroi de séparation (71).

7. Système (1) selon l'une quelconque des revendications 1 à 6, **caractérisé en ce que** lesdits premiers moyens de réglage (50) comprennent un actionneur pour relier fluidiquement ladite sixième chambre (62) à ladite cinquième chambre (60) et à ladite quatrième chambre (28) et/ou à ladite première chambre (22), et au moins une vanne (64) pour distribuer ledit fluide incompressible entre ladite cinquième chambre (60) et ladite quatrième chambre (28) et/ou ladite première chambre (22).

8. Système (1) selon l'une quelconque des revendications 1 à 7, **caractérisé en ce que** ledit dispositif de transfert (10) comprend des deuxièmes moyens (90) pour ajuster la pression du fluide incompressible de ladite première chambre (22) et/ou de ladite deuxième chambre (23) et/ou, directement ou indirectement, la pression dudit gaz à l'intérieur de ladite troisième chambre (27).

9. Véhicule à deux roues comprenant un châssis (4), au moins une roue arrière (3), un bras oscillant (2) pour ladite roue arrière (3) et un système d'oscillation du bras oscillant (2) par rapport audit châssis (4) selon l'une quelconque des revendications 1 à 8.
